# EUROPEAN PATENT SPECIFICATION

(11) **EP 2 461 114 B1**
(45) Date of publication and mention of the grant of the patent: **12.09.2018**
(21) Application number: 11187187.7
(22) Date of filing: 28.10.2011
(51) Int. Cl.: F24F 13/32, F24F 1/60, E04H 3/24, F16M 5/00

(54) **MODULAR SUPPORT ASSEMBLY FOR FLOOR MOUNTED APPARATUS**
MODULARE TRAGKONSTRUKTION ZUR GERÄTEAUFNAHME AM BODEN
SUPPORT MODULAIRE POUR LE CALE D'UN APPAREIL AU FOND

(30) Priority: 02.12.2010 IT VR20100034 U
(43) Date of publication of application: 06.06.2012
(73) Proprietor: VECAMCO S.r.l., 35030 Cervarese Santa Croce (PD) (IT)
(72) Inventor: Cappellari, Dino, 35030 Cervarese Santa Croce (PD) (IT)
(74) Representative: Fabris, Stefano

(56) References cited:
- EP-A2- 1 890 091
- BE-A- 620 598
- FR-A- 1 384 656
- US-A- 5 820 092
- US-B1- 6 729 083

## Description

### TECHNICAL FIELD OF THE INVENTION

The present invention regards a modular support. More in particular, the present invention regards a modular floor support for apparatus.

### STATE OF THE PRIOR ART

Certain types of apparatuses such as for example the components of air conditioning systems in buildings, both internal and external, but also other types of apparatuses, are usually installed on the floor or on the ground.

The correct installation on the ground or on the floor, to avoid damaging both the apparatus and the floor or the support surface, requires the use of supports, for example metallic, with grid structure, thus comprising longitudinal members and crosspieces assembled in various manners depending on the specific needs, such as for example supported by feet or other equivalent means.

The aforementioned supports are usually assembled on site before the installation of the apparatus, preferably using fastening means such as bolts and the like, or other equivalent means.

The on-site assembly of the aforementioned supports, especially in the case of apparatuses of large dimensions, or also in case of complex grid structures, is often quite complex, given that it is necessary to often use a high number of bolts for installing the support correctly.

This fact is particularly undesired in the case where it is required to modify the structure of the support afterwards, i.e. after completing the assembly thereof.

For example, in some cases it may be necessary to widen the support structure, in one or more directions, so as to receive other apparatuses on the same support, or for replacing the previously installed apparatuses with other more cumbersome ones, or for other reasons still related to the specific application needs.

In these cases, in the supports of the known type it is necessary to demount one or more parts, for example one or more longitudinal members or crosspieces, and replace them with other of different dimensions, or in the most disadvantageous cases it is necessary to demount and replace the entire support.

It is thus clear that the supports of the known type are not suitable to meet the needs of the users in terms of the application versatility, especially as regards possible modifications to be carried out after the assembly.

Document US 5,820,092 describes a modular assembly kit for air conditioning systems comprising longitudinal members and crosspieces which are reciprocally connected by engagement of a lateral portion of the longitudinal member having a T-shaped cross section in a corresponding T-shaped cross section slot provided in the extremity of the crosspiece. Document US 5,820,092 discloses a modular support comprising the features of the preamble of claim 1.

Document EP 1 890 091 describes a modular air conditioner support assembly adjustable in length, comprising longitudinal members and crosspieces both having an L-shaped cross section, reciprocally connected by screws. Each longitudinal member comprises two pieces which are adjustably reciprocally connectable in order to achieve different lengths.

### OBJECTS OF THE INVENTION

The technical task of the present invention is thus to improve the state of the art, thus providing an assembly modular support that is more simple, quick, and easy with respect to the supports of the known type.

Within such technical task, an object of the present invention is to provide a modular support capable of allowing the users to carry out modifications to the structure that distinguishes it even afterwards, i.e. after the assembly, without necessarily requiring demounting the parts.

This task and object are attained by the modular support according to the attached claim 1.

Due to the presence, on each of the longitudinal members, of various areas for selective connection with the ends of the crosspieces, the modular support according to the invention can be easily composed in two directions, thus it allows providing grid structures extended and developed at will.

The coupling of the crosspieces and of the longitudinal members is particularly advantageous due to the presence of the continuous edges of each of the longitudinal members, which provide a solid support at the ends of the crosspieces.

The modular support according to the invention can also be modified and/or extended and/or developed even after the first assembly, in that new crosspieces and longitudinal members can be easily coupled to those already present.

Further advantageous characteristics are described in the dependent claims.

### BRIEF DESCRIPTION OF THE DRAWINGS.

The characteristics of the invention shall be clearer to those skilled in the art from the description that follows and from the attached drawings, provided by way of non-limiting example, wherein:
figure 1 is an axonometric view of the assembled modular support, according to the present invention;
figure 2 is an exploded axonometric view of the modular support;
figure 3 is a detail of figure 1;
figure 4 is an axonometric view of a detail of one of the longitudinal members of the modular structure;
figure 5 is a detailed axonometric view of one of the crosspieces of the modular structure;
figure 6 is an axonometric view of a connection fitting between two adjacent longitudinal members of the modular structure according to the invention.

### EMBODIMENTS OF THE INVENTION.

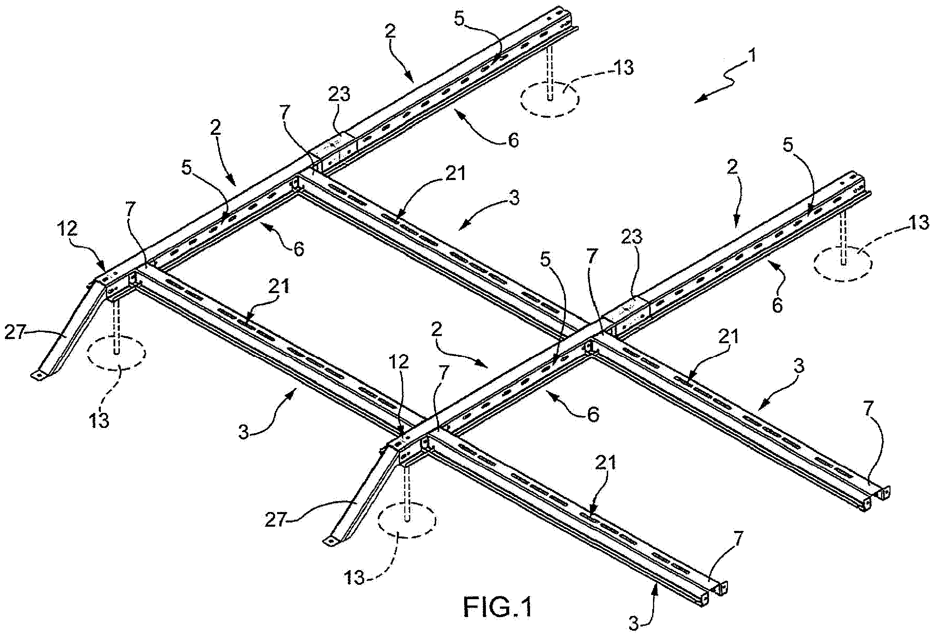

With reference to the attached figure 1, a modular support according to the present invention, in assembled configuration, is indicated in its entirety with 1.

The modular support according to the invention is used in a definitely general way for the floor installation of apparatuses of various types, both inside and outside buildings, sheds, or any other type of construction.

The apparatuses that can be installed on the support according to the present invention may be of any kind, even of high weights and large overall dimensions.

The modular support 1 according to the invention comprises longitudinal members 2 and crosspieces 3 mutually orthogonally coupled to form at least one grid structure resting on the ground.

The expression "grid structure" is used to indicate, hereinafter in the present detailed description, a closed structure constituted by at least two longitudinal members 2 and at least two crosspieces 3, orthogonal with respect to each other.

Such grid structure is represented in figure 1, in which the represented modular support 1 comprises two further longitudinal members 2 and two further crosspieces 3, solely by way of example.

Evidently, the modular support 1 according to the present invention may actually comprise any number of longitudinal members 2 and any number of crosspieces 3, assembled variously.

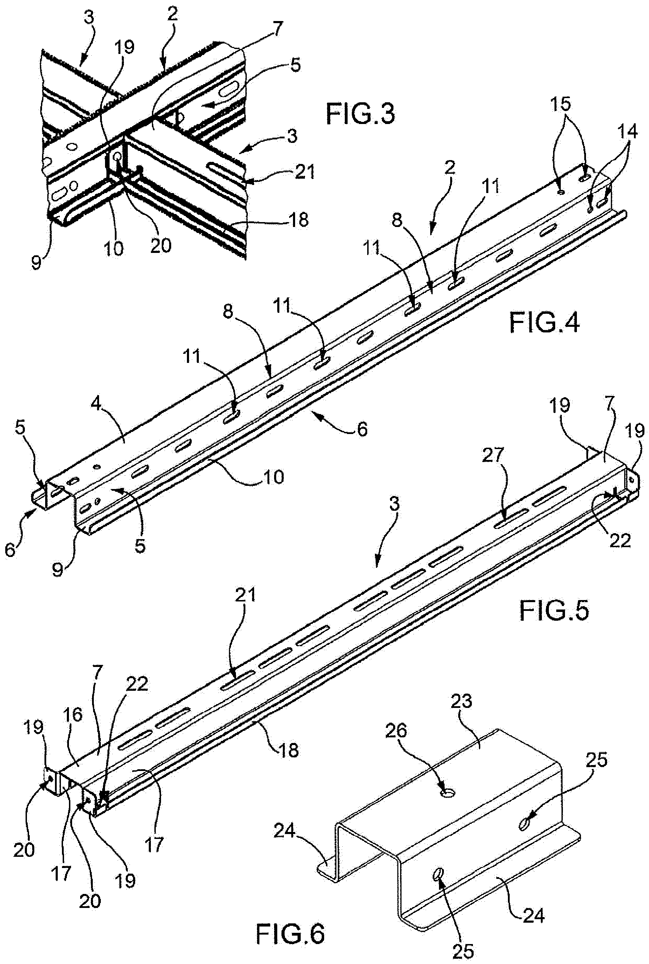

As illustrated in the detail of figure 4, each of the longitudinal members 2 of the support 1 has transverse sections having a central portion 4 substantially shaped as an inverted U, thus defining two opposite lateral faces 5.

Each of the longitudinal members 2 of the support 1 further comprises, along at least one of the lateral faces 5 thereof, a respective continuous edge 6 for supporting the ends 7 of respective crosspieces 3. Each of the longitudinal members 2 also comprises, along at least one of the lateral faces 5, a plurality of areas for selective connection, generally indicated with 8, with the ends 7 of the crosspieces 3.

The characteristics mentioned above allow attaining considerable technical advantages, as clearly outlined hereinafter.

More in particular, each of the longitudinal members 2 of the support 1 comprises, along both lateral faces 5 thereof, respective continuous edges 6 for supporting the ends 7 of respective crosspieces 3. Furthermore, each of the longitudinal members 2 also comprises, along both lateral faces 5 thereof, a plurality of areas for selective connection 8 with the ends 7 of the crosspieces 2.

Each continuous edge 6 of each longitudinal member 2 of the support 1 comprises a respective first flat portion 9 orthogonal to the respective lateral face 5, and a second flat portion 10 orthogonal to the first flat portion 9.

In other words, each continuous edge 6 has substantially U-shaped transverse sections, with opposite concavity with respect to that of the central portion 4.

Each of the areas for selective connection 8 of each of the longitudinal members 2, provided for, as mentioned, on both faces 5, comprises at least one pair of slot openings 11, which allow fastening the ends 7 of the crosspieces 3 through fastening means, as outlined more clearly hereinafter.

The slot openings 11 are arranged horizontally.

The slot openings 11 are arranged, along each of the lateral faces 5 of each longitudinal member 2, equally spaced from each other, so as to make the choice of the area 8 to which the end 7 of each crosspiece 3 is connected extremely free.

In other embodiments of the support, the pairs of slot openings 11 can be arranged at different distances from each other, depending on the specific application needs.

Each of the longitudinal members 2 comprises end connection portions 12 for example to other longitudinal members 2, or to height adjustable feet 13, illustrated with a dashed line in figure 1, which are however mounted optionally.

The end connection portions 12 of the longitudinal members 2 comprise lateral slots and/or holes 14, and additionally upper slots and/or holes 15, which can be used variously depending on the needs, as clarified hereinafter.

Each of the crosspieces 3 has transverse sections comprising a central region 16 substantially shaped as an inverted U, defining two opposite lateral walls 17.

Such opposite lateral walls 17 of each of the crosspieces 3 extend with respective substantially U-shaped folded portions 18, with concavities opposite to that of the central region 16.

Thus, the transverse section of each of the crosspieces 3 is entirely similar, or even identical, to that of each longitudinal member 2, as visible observing in particular figures 4 and 5. Each end 7 of each of the crosspieces 3 comprises a pair of folded strips 19 of the lateral walls 17, i.e. they constitute extensions of the lateral walls 17.

The aforementioned folded strips 19 are provided with respective fastening holes 20 using fastening means, the latter not being represented in the figures but being of the type known and conventional in the industry: for example bolts or other equivalent means can be used.

Furthermore, other means equivalent to the fastening means can be used.

The holes 20 for fastening the crosspieces 3 to the longitudinal members 2 are adapted to be selectively arranged at the slot openings 11 of each of the longitudinal members 2, so as to fix the crosspieces 3 with respect to the longitudinal members 2 in the desired positions and thus according to the configurations most suitable for the specific application.

More in detail, each of the crosspieces 3 may be fixed to each one of the longitudinal members 2 in any position defined by two adjacent slot openings 11, so as to make the assembly of the modular support 1 extremely versatile.

The folded strips 19 can be provided at only one of the ends 7 of each crosspiece 3.

Each of the crosspieces 3 comprises upper openings 21 for fastening to the apparatus and the like, for example using screw fastening means or using other equivalent means.

The upper openings 21 are, in the described embodiment, slot-shaped, but they could also be shaped differently depending on the various application needs.

Each of the crosspieces 3 further comprises, at each of the ends 7 or even at only one of them, a transverse notch 22 in which the second flat portion 10 of one of the continuous edges 6 of each of the longitudinal members 2 is adapted to be fixed.

The aforementioned transverse notch 22 further extends to the substantially U-shaped folded portions 18 of each of the crosspieces 3.

The coupling between each longitudinal member 2 and each crosspiece 3, with reference to the latter aspect, is illustrated in detail in figure 3.

Actually, as observable the coupling between the end 7 of each crosspiece 3 and each longitudinal member 2 occurs so that the second flat portion 10 is engaged in the transverse notch 22 of the end 7: thus doing, the end 7 is integrally supported by the continuous edge 6, providing the best stable coupling conditions for then mounting the fastening means through the fastening holes 20 and the slot openings 11.

Actually, in this manner the folded strips 19 of each end 7 are maintained integrally in contact with the respective lateral face 5 of the longitudinal member 2, and the insertion of the fastening means or of the other used means is considerably facilitated during the assembly.

The modular support 1 according to the invention comprises at least one connection fitting 23 between two adjacent longitudinal members 2 which form the support 1.

More in particular, the modular support 1 comprises a given number of connection fittings 23, between adjacent longitudinal members 2, depending on the specific application needs, i.e. depending on the number of longitudinal members 2 which should be used for providing the modular support 1 most suitable for the need.

Each connection fitting 23, illustrated in detail in figure 6, has substantially transverse sections shaped as an inverted-U, with folded lateral strips 24.

Each connection fitting 23 comprises, more in detail, two pairs of opposite fastening holes 25, using screw fastening means or other equivalent means, at the lateral slots and/or holes 14 of each of the longitudinal members 2.

Each connection fitting 23 also comprises a respective upper hole 26, which can be used for various purposes, for example for mounting the adjustable feet 13, or for other purposes.

For mutually fastening two adjacent longitudinal members 2 in the support 1, as it occurs in the embodiment illustrated in figure 1, each connection fitting 23 is positioned astride the end of the two longitudinal members 2 mutually head-approached, so as align the opposite holes 25 to the lateral slots and/or holes 14 of the longitudinal members 2. Alternatively, in situations where this is required, each connection element 23 can also be solely fastened to a respective longitudinal member 2, using the opposite fastening holes 25, using screw fastening means or other equivalent means, at the lateral slots and/or holes 14 and at the slot openings 11.

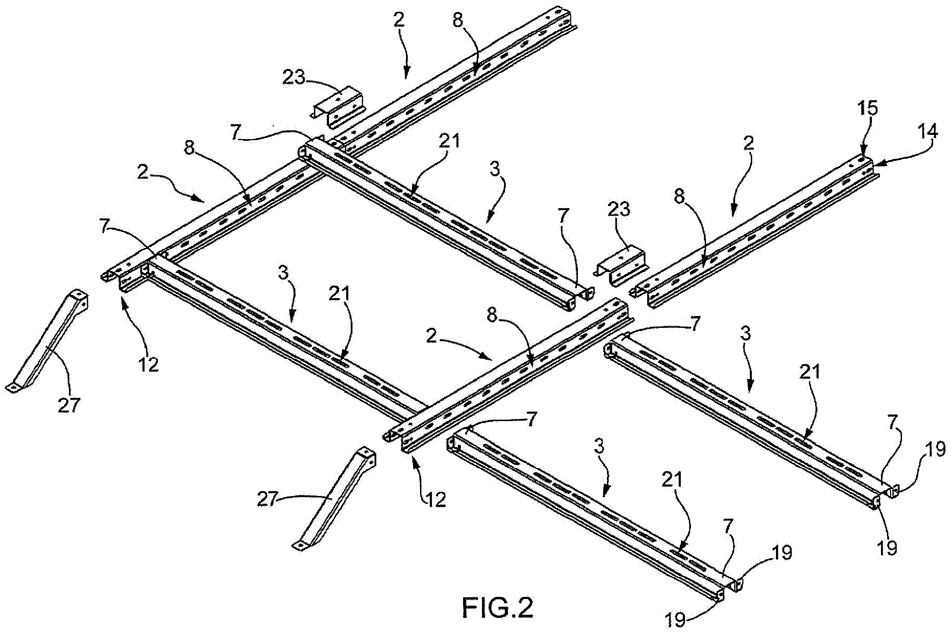

The modular support 1 according to the invention further comprises, as illustrated in figures 1 and 2, anti-wind feet 27, mounted using screw fastening means or other equivalent means at the lateral slots and/or holes 14 of one or more of the longitudinal members 2.

Such anti-wind feet 27 allow increasing the stability of the modular support 1, and they are however mounted optionally.

The invention thus conceived allows obtaining considerable technical advantages.

The modular support has a structure that can be composed in two directions, thus it allows providing grid structures extended and developed at will due to the possibility of connecting the longitudinal members 2 to each other and the crosspieces 3 to the longitudinal members 2 in an extremely versatile manner.

In particular, this important result can be attained due to the presence, on each of the longitudinal members 2, of various areas for selective connection 8 with the ends 7 of the crosspieces 3.

Furthermore, the assembly of the crosspieces 3 to the longitudinal members 2 occurs through few, simple and quick operations, due to the presence of the transverse notches 22 which allow firmly coupling the aforementioned components before mounting the fastening means. Such coupling is particularly advantageous due to the presence of the continuous edges 6 of each of the longitudinal members 2, which provide a solid support at the ends 7 of the crosspieces 3.

Such support provided for by the continuous edges 6 is also advantageous for assembled support, in that it allows supporting the applied loads more efficiently.

The modular support according to the invention can be modified and widened at any time without requiring demounting any component, in that further crosspieces 3 and/or longitudinal members 2 can be quickly assembled to that of the previously installed support.

In addition, the coupling between each longitudinal member 2 and each crosspiece 3 occurs using a minimum number of bolts, with evident benefits in terms of costs and assembly times.

The components of the modular support 1, i.e. the longitudinal members 2 and the crosspieces 3, and also the connection fittings 23, are also easy to stack with respect to each other due to the fact that they have the same transverse sections, and thus they can be provided relatively short: hence this leads to evident advantages in terms of simplicity and transport economicity.

It has thus been observed that the invention attains all the proposed objects.

The present invention has been described according to preferred embodiments, but equivalent variants can be conceived without departing from the scope of protection provided for by the following claims.

## Claims

1. Modular support, particularly for the floor support of apparatuses and the like, comprising longitudinal members (2) and crosspieces (3) mutually coupled to form at least one grid structure resting on the ground, each of said longitudinal members (2) comprising, along at least one of the lateral faces (5) thereof, a continuous edge (6) for supporting the ends (7) of respective crosspieces (3), and a plurality of areas for selective connection (8) with said ends (7) of said crosspieces (3), each continuous edge (6) of each longitudinal member (2) of the support (1) comprising a respective first flat portion (9) orthogonal to the respective lateral face (5), and a second flat portion (10) orthogonal to the first flat portion (9), each of the crosspieces (3) further comprising, at each of the ends (7) or even at only one of them, a transverse notch (22) in which the second flat portion (10) of one of the continuous edges (6) of each of the longitudinal members (2) is adapted to be fixed, **characterised in that** each of said crosspieces (3) has transverse sections comprising a central region (16) substantially shaped as an inverted U defining two opposite lateral walls (17) extending with respective substantially U-shaped folded portions (18) with concavity opposite to that of said central region (16), said transverse notch (22) extending to said substantially U-shaped folded portions (18) of each of said crosspieces (3).

2. Support according to claim 1, wherein each of said longitudinal members (2) comprises, along both said lateral faces (5), two respective continuous edges (6).

3. Support according to the preceding claim, wherein each of said longitudinal members (2) has transverse sections having a central portion (4) substantially shaped as an inverted U and defining said lateral faces (5), said continuous edge (6) comprising a first flat portion (9) orthogonal to the respective lateral face (5), and a second flat portion (10) orthogonal to said first flat portion (9).

4. Support according to one of the preceding claims, wherein each of said areas for selective connection (8) of each of said longitudinal members (2) comprises at least one pair of slot openings (11).

5. Support according to claim 1, wherein at least one of said ends (7) of each of said crosspieces (3) comprises a pair of folded strips (19) of said lateral walls (17), said folded strips (19) being provided with respective fastening holes (20), using screw fastening means or other equivalent means, adapted to be selectively arranged at said slot openings (11) of said longitudinal members (2).

6. Support according to one of the preceding claims, comprising at least one connection fitting (23) between two adjacent longitudinal members (2) which form the support.

7. Support according to the preceding claim, wherein said connection fitting (23) has transverse sections substantially shaped as an inverted U, with folded lateral strips (24).

8. Support according to the preceding claim, wherein said connection fitting (23) comprises at least two pairs of opposite fastening holes (25), using screw fastening means or other equivalent means, at respective lateral slots and/or holes (14) of each of said longitudinal members (2).

9. Support according to one of the preceding claims comprising height adjustable feet (13) associable to respective connection portions (12) of said longitudinal members (2) and/or of said crosspieces (3) .

10. Support according to one of the preceding claims, wherein each of said crosspieces (3) comprises upper openings (21) for fastening to apparatus and the like, using screw fastening means or other equivalent means.

## Patentansprüche

1. Modularer Träger, insbesondere für die Bodenabstützung von Vorrichtungen und dergleichen, mit Längsträgern (2) und Stegen (3), die miteinander verbunden sind, um zumindest eine Gitterstruktur zum Abstützen auf dem Boden zu bilden, wobei jeder der Längsträger (2) entlang zumindest einer der zugehörigen Seitenflächen (5) eine durchgehende Kante (6) zum Tragen der Enden (7) von jeweiligen Stegen (3) und eine Mehrzahl von Bereichen zur selektiven Verbindung (8) mit den Enden (7) der Stege (3) aufweist, wobei jede durchgehende Kante (6) von jedem Längsträger (2) des Trägers (1) einen jeweiligen ersten flachen Bereich (9), orthogonal zur jeweiligen Seitenfläche (5), und einen zweiten flachen Bereich (10), orthogonal zum ersten flachen Bereich (9), aufweist, wobei jeder der Stege (3) ferner an jedem der Enden (7) oder sogar nur an einem von ihnen eine Querkerbe (22) aufweist, in der der zweite flache Bereich (10) von einer der fortlaufenden Kanten (6) von jedem der Längsträger (2) angepasst ist, um fixiert zu werden, **dadurch gekennzeichnet, dass** jeder der Stege (3) Querschnitte aufweist, die einen zentralen Bereich (16) umfassen, der im Wesentlichen als ein umgekehrtes U geformt ist, das zwei gegenüberliegende Seitenwände (17) bildet, die sich mit jeweiligen, im Wesentlichen U-förmig gefalteten Bereichen (18) mit einer Konkavität gegenüber derjenigen des zentralen Bereichs (16) erstrecken, wobei sich die Querkerbe (22) zu den im Wesentlichen U-förmig gefalteten Bereiche (18) von jedem der Stege (3) erstreckt.

2. Träger gemäß Anspruch 1, wobei jeder der Längsträger (2) entlang der beiden Seitenflächen (5) zwei jeweilige durchgehende Kanten (6) aufweist.

3. Träger gemäß dem vorhergehenden Anspruch, wobei jeder der Längsträger (2) Querschnitte mit einem zentralen Bereich (4) aufweist, der im Wesentlichen als ein umgekehrtes U geformt ist und die seitlichen Flächen (5) bildet, wobei die durchgehende Kante (6) einen ersten flachen Bereich (9), orthogonal zur jeweiligen Seitenfläche (5), und einen zweiten flachen Bereich (10), orthogonal zum ersten flachen Bereich (9), aufweist.

4. Träger gemäß einem der vorhergehenden Ansprüche, wobei jeder der Bereiche zur selektiven Verbindung (8) von jedem der Längsträger (2) zumindest ein Paar von Schlitzöffnungen (11) aufweist.

5. Träger gemäß Anspruch 1, wobei zumindest eines der Enden (7) von jedem der Stege (3) ein Paar gefalteter Streifen (19) der Seitenwände (17) aufweist, wobei die gefalteten Streifen (19) mit jeweiligen Befestigungslöchern (20) unter Verwendung von Schraubenbefestigungsmittel oder anderen äquivalenten Mitteln versehen sind, die angepasst sind, um selektiv an den Schlitzöffnungen (11) der Längsträger (2) angeordnet zu werden.

6. Träger gemäß einem der vorhergehenden Ansprüche, der zumindest eine Anschlussarmatur (23) zwischen zwei benachbarten Längsträgern (2) aufweist, die den Träger bilden.

7. Träger gemäß dem vorhergehenden Anspruch, wobei die Anschlussarmatur (23) Querschnitte aufweist, die im Wesentlichen wie ein umgekehrtes U mit gefalteten seitlichen Streifen (24) geformt sind.

8. Träger gemäß dem vorhergehenden Anspruch, wobei die Anschlussarmatur (23) zumindest zwei Paare von gegenüberliegenden Befestigungslöchern (25) unter Verwendung von Schraubenbefestigungsmittel oder anderen äquivalenten Mitteln an jeweiligen seitlichen Schlitzen und/oder Löchern (14) von jedem der Längsträger (2) aufweist.

9. Träger gemäß einem der vorhergehenden Ansprüche mit höhenverstellbaren Füßen (13), die mit jeweiligen Verbindungsbereichen (12) der Längsträger (2) und/oder Stege (3) verbindbar sind.

10. Träger gemäß einem der vorhergehenden Ansprüche, wobei jeder der Stege (3) obere Öffnungen (21) zum Befestigen an Vorrichtungen und dergleichen unter Verwendung von Schraubenbefestigungsmittel oder anderen äquivalenten Mitteln aufweist.

## Revendications

1. Support modulaire, en particulier pour le support au sol d'appareils et similaires, comprenant des éléments longitudinaux (2) et des traverses (3) mutuellement accouplés pour former au moins une structure de grille reposant sur le sol, chacun desdits éléments longitudinaux (2) comprenant, le long d'au moins une des faces latérales (5) de celui-ci, un bord continu (6) pour supporter les extrémités (7) de traverses (3) respectives, et une pluralité de zones pour une liaison sélective (8) avec lesdites extrémités (7) desdites traverses (3), chaque bord continu (6) de chaque élément longitudinal (2) du support (1) comprenant une partie plane (9) respective orthogonale à la face latérale (5) respective, et une seconde partie plane (10) orthogonale à la première partie plane (9), chacune des traverses (3) comprenant en outre, au niveau des extrémités (7) ou même au niveau d'une seule d'entre elles, une encoche transversale (22) dans laquelle la seconde partie plane (10) d'un des bords continus (6) de chacun des éléments longitudinaux (2) est adaptée pour être fixée, **caractérisé en ce que** chacune desdites traverses (3) a des sections transversales comprenant une région centrale (16) sensiblement en forme d'un U renversé définissant deux parois latérales opposées (17) s'étendant avec des parties pliées respectives sensiblement en forme de U (18) avec une concavité opposée à celle de ladite région centrale (16), ladite encoche transversale (22) s'étendant jusqu'auxdites parties pliées sensiblement en forme de U (18) de chacune desdites traverses (3).

2. Support selon la revendication 1, dans lequel chacun desdits éléments longitudinaux (2) comprend, le long des deux dites faces latérales (5), deux bords continus (6) respectifs.

3. Support selon la revendication précédente, dans lequel chacun desdits éléments longitudinaux (2) a des sections transversales ayant une partie centrale (4) sensiblement en forme d'un U renversé et définissant lesdites faces latérales (5), ledit bord continu (6) comprenant une première partie plane (9) orthogonale à la face latérale (5) respective, et une seconde partie plane (10) orthogonale à ladite première partie plane (9).

4. Support selon l'une des revendications précédentes, dans lequel chacune desdites zones pour une liaison sélective (8) de chacun desdits éléments longitudinaux (2) comprend au moins une paire d'ouvertures en fente (11).

5. Support selon la revendication 1, dans lequel au moins une desdites extrémités (7) de chacune desdites traverses (3) comprend une paire de bandes pliées (19) desdites parois latérales (17), lesdites bandes pliées (19) étant pourvues de trous de fixation respectifs (20), utilisant des moyens de fixation à vis ou autres moyens équivalents, adaptés pour être sélectivement agencés au niveau desdites ouvertures en fente (11) desdits éléments longitudinaux (2).

6. Support selon l'une des revendications précédentes, comprenant au moins un raccord de liaison (23) entre deux éléments longitudinaux adjacents (2) qui forment le support.

7. Support selon la revendication précédente, dans lequel ledit raccord de liaison (23) a des sections transversales sensiblement en forme d'un U renversé, avec des bandes latérales pliées (24).

8. Support selon la revendication précédente, dans lequel ledit raccord de liaison (23) comprend au moins deux paires de trous de fixation opposés (25), utilisant des moyens de fixation à vis ou d'autres moyens équivalents, au niveau de fentes et/ou de trous latéraux respectifs (14) de chacun desdits éléments longitudinaux (2).

9. Support selon l'une des revendications précédentes, comprenant des pieds réglables en hauteur (13) associables à des parties de liaison respectives (12) desdits éléments longitudinaux (2) et/ou desdites traverses (3).

10. Support selon l'une des revendications précédentes, dans lequel chacune desdites traverses (3) comprend des ouvertures supérieures (21) pour une fixation à un appareil et similaire, utilisant des moyens de fixation à vis ou d'autres moyens équivalents.
